# EUROPÄISCHE PATENTSCHRIFT

(11) **EP 3 031 684 B1**
(45) Veröffentlichungstag und Bekanntmachung des Hinweises auf die Patenterteilung: **26.06.2019**
(21) Anmeldenummer: 15193067.4
(22) Anmeldetag: 04.11.2015
(51) Int. Cl.: B60T 17/22, F16D 65/12, F16D 66/00

(54) **BREMSSCHEIBE MIT INNENLIEGENDER SENSOREINRICHTUNG, BREMSSYSTEM SOWIE FAHRZEUG, VERWENDUNG, VERFAHREN JEWEILS UMFASSEND EIN SOLCHES BREMSSYSTEM, UND VERFAHREN ZUR HERSTELLUNG DER BREMSSCHEIBE**
BRAKE DISC COMPRISING AN INTERNAL SENSOR DEVICE, BRAKE SYSTEM AND VEHICLE, USE, METHOD EACH COMPRISING SUCH A BRAKING SYSTEM, AND METHOD FOR MANUFACTURING A BRAKE DISC
DISQUE DE FREIN A DISPOSITIF DE CAPTEUR INTEGRE, SYSTEME DE FREINAGE ET VEHICULE, UTILISATION, PROCEDE COMPRENANT RESPECTIVEMENT UN TEL SYSTEME DE FREINAGE, ET PROCEDE DE MANUFACTURE D'UN TEL DISQUE DE FREIN

(30) Priorität: 25.11.2014 DE 102014117286
(43) Veröffentlichungstag der Anmeldung: 15.06.2016
(73) Patentinhaber: Buderus Guss GmbH, 35236 Breidenbach (DE)
(72) Erfinder: Hiller, Wolfgang, 58809 Neuenrade (DE); Ketteler, Georg, 35232 Dautphetal (DE)
(74) Vertreter: Patentanwälte Olbricht Buchhold Keulertz

(56) Entgegenhaltungen:
- EP-A1- 2 642 149
- DE-A1- 10 018 513
- US-A1- 2006 273 148

## Beschreibung

Die Erfindung betrifft eine Bremsscheibe gemäß dem Oberbegriff von Anspruch 1, ein Bremssystem nach Anspruch 7, ein Fahrzeug mit einem solchen Bremssystem gemäß Anspruch 8, eine Verwendung eines solchen Bremssystems in einem Fahrzeug nach Anspruch 9, ein Verfahren zum Betrieb eines solchen Bremssystems nach Anspruch 10 und ein Verfahren zur Herstellung einer Bremsscheibe nach Anspruch 11.

Aus DE 100 18 513 A1 ist eine Überwachungseinrichtung für Bremsscheiben bekannt, die für Schienenfahrzeuge gedacht ist. Diese verfügt über wenigstens einen zur Temperaturüberwachung dienenden Sensor, der in einem Kühlkanal der Bremsscheibe oder in der Nähe der Bremsscheibe angeordnet ist. Das Sensorsignal steht in Bezug zur Temperatur der Bremsscheibe. Zusätzlich ist wenigstens ein die Sensorsignale drahtlos versendender Sender vorgesehen. Die gesendeten Sensorsignale werden anschließend mit einem Empfänger empfangen. Das Dokument EP 2642149 A1 beschreibt eine Temperatursensoreinrichtung in dem Achsaufnahemenflansch, hier ist die Sensoreinrichtung nicht eingegossen.

Nachteilhaft an einer derartigen Ausgestaltung ist, dass die Kosten pro Bremsscheibe hoch sind, weil die Montage des Sensors und des Senders an der Bremsscheibe oder in deren Nähe aufwendig ist. Außerdem können die freiliegenden Kabel, Sender und Sensoren durch äußere Gegenstände wie Steinschlag, Schnee oder anderen Untergrund mechanisch beschädigt werden. Aufgrund der hohen Verschleißanfälligkeit kann die Signalausgabe über der Laufzeit der Bremsscheibe ausfallen.

Aufgrund der hohen thermischen Schwankungen sind der Sender, der Sensor und die Kabel zudem anfällig gegenüber Feuchtigkeit, wodurch es zu Kriechströmen und Kurzschlüssen kommt. Hierdurch wird die Signalausgabe verfälscht, phasenweise unterbrochen oder dauerhaft zerstört. Eine derartige Technik ist daher ungeeignet, um zur aktiven Regelung einer Bremse bzw. zur Anpassung einer Bremscharakteristik eingesetzt zu werden. So richtet auch DE 100 18 513 A1 die Nutzung der Vorrichtung auf die rein passive Bestimmung der Länge eines Bremsweges aus. Insbesondere würde eine aktive Nutzung von verfälschten Signalausgaben zu einem fehlerbehafteten Ansprechverhalten der Bremse führen. Auf der Schiene kann dies bereits zu einem verspäteten Einleiten einer Bremsung führen. Eine Nutzung bei Kraftfahrzeugen wäre nicht weniger risikoreich, weil eine ungleiche Bremskraftverteilung durch Falschsignale der einzelnen Bremsscheiben zu einem Verlust der Spurtreue führen kann. Das Fahrzeug ist dann vom Fahrer oder von Fahrassistenzsystemen unkontrollierbar. Aufgabe der Erfindung ist es daher, die Nachteile des Standes der Technik zu beseitigen und eine Bremsscheibe zu entwickeln, die geringe Herstellkosten aufweist, und deren Sensoren über die Lebensdauer der Bremsscheibe zuverlässig funktionieren. Außerdem soll ein Bremssystem mit einer solchen Bremsscheibe, insbesondere in einem Fahrzeug bereitgestellt werden. Weitere Erfindungsziele liegen in der Verwendung des Bremssystems und der verfahrensgemäßen Nutzung des Bremssystems.

Hauptmerkmale der Erfindung sind im kennzeichnenden Teil von Anspruch 1 sowie den Ansprüchen 7, 8, 9, 10 und 11 angegeben. Ausgestaltungen sind Gegenstand der Ansprüche 2 bis 6 und 12.

Die Erfindung betrifft daher eine Bremsscheibe, insbesondere für Fahrzeuge und Kraftfahrzeuge, mit einer Reibscheibe, die an einer Achsbefestigungseinrichtung angeordnet ist, und mit einem Mikrosystem aufweisend eine Sensoreinrichtung und eine Sendeeinrichtung. Die Sensoreinrichtung weist zur Bestimmung eines Parameters wenigstens einen Sensor aus der Gruppe Temperatursensor, Schwingungssensor, Körperschallsensor und Dehnungssensor auf. Die Sendeeinrichtung ist zur drahtlosen Ausgabe eines Signals betreffend die mit der Sensoreinrichtung erfassten Parameter kommunizierend mit der Sensoreinrichtung verbunden. Erfindungsgemäß ist das Mikrosystem innenliegend in der Reibscheibe und/oder der Achsbefestigungseinrichtung angeordnet.

Vorteilhaft hieran ist, dass das Mikrosystem in der innenliegenden Position vor äußeren Einflüssen geschützt ist. Die Bestimmung von Parametern mit dem Sensor und eine Übertragung der Daten an externe Empfänger werden so dauerhaft sichergestellt. Je nach Sensorart können in der Bremsscheibe vorliegende thermische und/oder mechanische Belastungen wie Druck- und Zugkräfte, Verformung oder Schwingungen überwacht werden. Geeignet sind beispielsweise Thermoelemente oder integrierte Piezo-Sensoren direkt am Ort der Wirkung. Hierdurch können Betriebszustände der Bremsscheibe passiv überwacht und aktive Eingriffe in den Betrieb der Bremse vorgenommen werden. Fahrassistenzsysteme können das Fahrzeugverhalten besser antizipieren und es kann vor Überbelastungen oder Schädigungen der Bremsscheibe gewarnt werden. Das Schwingungsverhalten der Bremsscheibe sowie deren Akustik könnte darüber hinaus durch integrierte Piezo-Aktoren aktiv beeinflusst werden, wodurch die Bremsscheibe weniger strukturell belastet würde.

Unter Achsbefestigungseinrichtungen sind insbesondere Bremsscheibentöpfe oder -flansche zu verstehen. Diese weisen Koppelmittel zur rotationsfesten Anbindung an ein Rad oder eine Achse auf. Beispielsweise sind die Koppelmittel als Schraubenlöcher ausbildbar. Die Achsbefestigungseinrichtung liegt regelmäßig radial innerhalb der Reibscheibe.

In einer näheren Ausgestaltung der Erfindung ist vorgesehen, dass die Sensoreinrichtung einen Vorverstärker aufweist. Durch einen solchen Vorverstärker lassen sich Parameter besonders präzise messen.

Gemäß einer Variante der Erfindung ist in dem Mikrosystem ein Identifikationssignal hinterlegt, welches mit der Sendeeinrichtung ausgebbar ist. Damit können Informationen zur Bremsscheibe an externe Empfänger übermittelt werden. Diese Informationen können statisch sein, oder sie werden zur Identifizierung mit den dynamischen Informationen des Signals gekoppelt. Auf diese Weise können mehrere Mikrosysteme parallel betrieben werden und die ausgegebenen Signale sind eindeutig der Position des Mikrosystems zuordenbar. Das Identifikationssignal sollte wenigstens einen Parameter aus der Gruppe Identifikationsnummer, Bauteilnummer, Bremsscheibentyp, Produktionsnummer, Chargennummer, Herstelldatum oder Herstellerkennung umfassen. So können anhand des Identifikationssignals Grundeinstellung eines Bremssystems vorgenommen werden. Außerdem sind Herstellmängel rückverfolgbar. Insbesondere sind RFID-Daten geeignet, um im Mikrosystem hinterlegt zu sein.

Erfindungsgemäss ist in der Bremsscheibe das Mikrosystem durch Eingießen in die Reibscheibe und/oder die Achsbefestigungseinrichtung eingebracht. Damit beschränkt sich die Montage des Mikrosystems auf ein Einlegen in eine Gießform und die Montagekosten sind gering. Das Mikrosystem kann so innenliegend in der Reibscheibe und/oder der Achsbefestigungseinrichtung eingegossen werden.

Eine weitere spezielle Ausgestaltung sieht vor, dass das Mikrosystem hinter monolithisch ausgebildeten Wandungen der Reibscheibe und/oder hinter monolithisch ausgebildeten Wandungen der Achsbefestigungseinrichtung angeordnet ist. Damit kann das Mikrosystem im Bereich der Reibscheibe, im Bereich der Achsbefestigungseinrichtung oder in der Schnittstelle zwischen der Reibscheibe und der Achsbefestigungseinrichtung angeordnet sein.

Die Reibscheibe und die Achsbefestigung sollten jeweils aus einem Metall gegossen sein. Grundsätzlich besteht die Option, dass die Achsbefestigungseinrichtung und die Reibscheibe aus unterschiedlichen Materialien bestehen. Vorzugsweise wird dann die Achsbefestigungsvorrichtung an der Reibscheibe angegossen. Allerdings ist auch eine umgekehrte Gießreihenfolge denkbar. Bevorzugt eignet sich für die Reibscheibe ein eisenhaltiges Metall. Abweichend hierzu kann ein anderes Metall, insbesondere ein aluminiumhaltiges Material, für die Achsbefestigungseinrichtung eingesetzt werden, sofern diese nicht aus dem gleichen Material wie die Reibscheibe hergestellt wird. Hierdurch wird die Bremsscheibe leichter. Das Eingießen des Mikrosystems gelingt insbesondere dann einfach, wenn die Achsbefestigungsvorrichtung aus einem Material mit geringerem Schmelzpunkt als die Reibscheibe besteht. Dann sollte das Mikrosystem zwischen der Reibscheibe und der Achsbefestigungsvorrichtung oder aber vollständig in der Achsbefestigungsvorrichtung positioniert sein.

Durch das Umgießen des Mikrosystems wird dieses fest umschlossen und eine Abdichtung gegen ein Eindringen von Luft und Wasser in das Mikrosystem geschaffen. Daher wird eine spezielle Ausführung bevorzugt, bei der das Mikrosystem in allen Richtungen hinter monolithisch ausgebildeten Wandungen der Reibscheibe und/oder monolithisch ausgebildeten Wandungen der Achsbefestigungseinrichtung angeordnet ist. Damit ist das Mikrosystem sozusagen durch das Eingießen gekapselt bzw. ringsherum eingeschlossen.

Eine optionale Variante sieht vor, dass das Mikrosystem eine umhüllende Kapsel aufweist, welche einen höheren Schmelzpunkt aufweist als das angrenzende Material der Reibscheibe und/oder der Achsbefestigungseinrichtung. Die Sensor- und Sendeeinrichtung sind durch Ihre Position innerhalb der Kapsel vor Beschädigungen durch heiße Schmelze geschützt. Damit keine flüssige Schmelze in die Kapsel eindringt, sollte diese fluiddicht bzw. schmelzedicht ausgeführt sein. Geeignet sind beispielsweise Kapseln aus Metall, Glas und besonders bevorzugt aus Keramik. Ferner wird eine zweiteilige Kapselausgestaltung bevorzugt, damit diese um die Sensor- und Sendeeinrichtung montiert werden kann, d.h. die Kapsel ist nicht an die Sensor- und Sendeeinrichtung anzugießen. Es eignet sich beispielsweise eine Verschraubung oder eine Steckverbindung zwischen den beiden Kapselteilen. Bei geringfügigem Eindringen von Schmelze in enge Fügestellen kühlt die Schmelze sehr schnell und erstarrt, bevor sie in die Kapsel gelangt.

Zur Versorgung des Mikrosystems mit elektrischer Energie sind Akkumulatoren oder Energiegewinnungsvorrichtungen einsetzbar. Letztere können beispielsweise Masseelemente aufweisen, welche durch Drehzahländerungen der Bremsscheibe in Bewegung versetzt werden. Die Bewegungsenergie wird dann in elektrische Energie gewandelt.

Die Erfindung betrifft außerdem ein Bremssystem, insbesondere für Fahrzeuge und Kraftfahrzeuge, mit einer zuvor beschriebenen Bremsscheibe, einem Aktuator, mit welchem wenigstens ein Bremsbelag bewegt wird, der mit der Reibscheibe korrespondieren, und mit einer Regeleinheit, die eine Empfängereinrichtung aufweist, wobei die Empfängereinrichtung drahtlos kommunizierend mit der Sendeeinrichtung verbunden ist, und wobei in der Regeleinheit ein Regelalgorithmus hinterlegt ist, dessen Eingangsgröße wenigstens das Signal der Sendeeinrichtung und dessen Ausgangsgröße ein Regelsignal für oder an den Aktuator ist.

Damit kann das Bremssystem mittels des Regelalgorithmus an den Zustand der Bremsscheibe angepasst werden, welcher mit dem Sensor bestimmt wird. Dies umfasst nicht nur langsame Anpassungen über die Lebensdauer der Bremsscheibe, sondern entsprechend der Taktung der Signale Echtzeitanpassungen an die aktuelle Fahrsituation. Als weitere Eingangssignale für den Regelalgorithmus kommen Betätigungssignale eines Bremshebels bzw. -pedals, Sensorsignale von Antiblockiersystemen (ABS), elektronischen Stabilitätsprogrammen (ESP) und sonstigen Fahrassistenzsystemen in Betracht. Deren Effektivität wird durch die mögliche Echtzeitanpassung an den Zustand der Bremsscheibe deutlich verbessert.

Außerdem betrifft die Erfindung ein Fahrzeug mit einem solchen Bremssystem, vorzugsweise ein Kraftfahrzeug bzw. ein Straßenfahrzeug. Durch das erfindungsgemäße Bremssystem wird eine besonders hohe Sicherheit für die Fahrzeuginsassen erreicht. Gleiches gilt für eine erfindungsgemäße Verwendung eines solchen Bremssystems in einem Fahrzeug.

Darüber hinaus betrifft die Erfindung ein Verfahren zum Betrieb eines zuvor beschriebenen Bremssystems, bei dem ein Betrieb der Bremsscheibe durch wechselnden Kontakt zwischen der Bremsscheibe und dem Bremsbelag erfolgt. Mit der Sendeeinrichtung wird ein Signal ausgegeben, vorzugsweise wiederholt und besonders bevorzugt getaktet. Dieses Signal betrifft die mit der Sensoreinrichtung erfassten Parameter. Das Signal wird dann mit der Empfängereinrichtung empfangen und als Eingangsgröße in den Regelalgorithmus eingespeist. Anschließend erfolgt eine Anpassung des Regelsignals mit dem Regelalgorithmus zur Anpassung an das Signal. Entsprechend ist die Bremscharakteristik in Echtzeit an den Zustand der Bremsscheibe anpassbar. Die Fahrzeugreaktionen werden so deutlich besser vorherbestimmbar, so dass Fahrassistenzsysteme kritische Fahrmanöver besser beherrschen können, beispielsweise wenn die Bremsscheiben aufgrund von Kurven- oder Bergabfahrten deutlich unterschiedlich erwärmt sind. Bevorzugt umfasst das vom Regelalgorithmus ausgegebene Regelsignal eine mit der Bremsscheibentemperatur korrelierende Bremskraftverstärkung pro Rad eines Fahrzeugs.

Ferner betrifft die Erfindung ein Verfahren zur Herstellung einer wie vorstehend beschriebenen Bremsscheibe. Bei diesem wird eine Gießform mit einer Negativform einer Bremsscheibe, oder einer Reibscheibe einer Bremsscheibe, oder einer Achsbefestigungsvorrichtung einer Bremsscheibe bereitgestellt, wobei die Gießform eine Kokille oder einen Kokilleneinleger mit wenigstens einem Kühlkanal aufweist. Ein Mikrosystem wird in die Gießform im Bereich der Kokille oder des Kokilleneinlegers eingelegt. Durch den Kühlkanal wird ein Fluid geleitet. Weiterhin wird flüssiges Metall in die Gießform eingefüllt und das Mikrosystem mit dem flüssigen Metall umspült. Anschließend wird das eingefüllte Metall abgekühlt und erstarrt. Daraufhin wird das erstarrte Metall entformt.

Vorteilhaft an dem erfindungsgemäßen Verfahren ist, dass die Temperatur des Mikrosystems während des Gießens unter einem kritischen Grenzwert gehalten werden kann. Elektronische Bauteile des Mikrosystems werden so vor Schäden geschützt. Bevorzugt wird die Innentemperatur des Mikrosystems durch das Kühlen mit dem Kühlkanal unter einer Temperatur von 210°C, bevorzugt unter 180°C und besonders bevorzugt unter 170°C gehalten.

In einer speziellen Ausgestaltung des Verfahrens ist vorgesehen, dass die Kühlrate des flüssigen Metalls über der Oberfläche der Negativform durch das Durchleiten des Fluids durch den Kühlkanal in der Umgebung des Mikrosystems am höchsten ist. Mithin werden nur im Bereich der Mikrokapsel andere Gefügestrukturen durch das schnelle Abkühlen bewirkt. Der Rest der Bremsscheibe kann durch langsamere Abkühlraten optimal an die Bremsenanforderung angepasst sein.

Weitere Merkmale, Einzelheiten und Vorteile der Erfindung ergeben sich aus dem Wortlaut der Ansprüche sowie aus der folgenden Beschreibung eines Ausführungsbeispiels anhand der Zeichnung. Es zeigt:

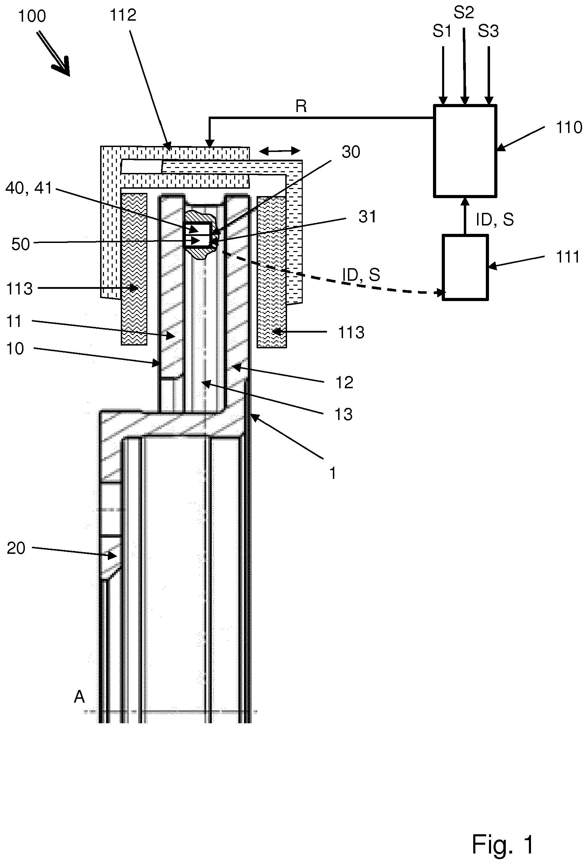

- Fig. 1: eine schematische Ansicht eines Bremssystems.

In Fig. 1 ist eine schematische Ansicht eines Bremssystems 100 dargestellt. Ein Schnitt führt durch eine Bremsscheibe 1, insbesondere in der Ebene von deren Drehachse A. Die Bremsscheibe 1 setzt sich zusammen aus einer Reibscheibe 10 und einer Achsbefestigungseinrichtung 20. Die Reibscheibe 10 und die Achsbefestigungseinrichtung 20 sind gemeinsam monolithisch aus einem Metall gegossen. Wie man sieht, setzt sich die Reibscheibe 10 zusammen aus einer vorderen Scheibe 11 und einer hinteren Scheibe 12. Die vordere und hintere Scheibe 11, 12 sind durch Verbindungselemente 13, insbesondere Verbindungsstege verbunden.

In einem Zeichnungsausbruch im gezeigten Verbindungselemente 13 sieht man ein Mikrosystem 30. Das Mikrosystem 30 ist damit innenliegend in der Reibscheibe 10 angeordnet. Es weist eine Sensoreinrichtung 40 mit einem Vorverstärker 41 sowie eine Sendeeinrichtung 50 auf, welche innerhalb einer Kapsel 31 angeordnet sind. Die Kapsel 31 erlaubt, das Mikrosystem 30 unmittelbar durch Eingießen in die Reibscheibe 10, alternativ auch in die Achsbefestigungseinrichtung 20, einzugießen. Hierfür besteht die Kapsel 31 aus einem Material, welches einen höheren Schmelzpunkt aufweist als das angrenzende Material der Reibscheibe 10. Die Kapsel 31 ist also schmelzefest und fluiddicht gegenüber der Schmelze. Durch das Eingießen ist das Mikrosystem 30 vorliegend hinter monolithisch ausgebildeten Wandungen der Reibscheibe 10 angeordnet, welche das Mikrosystem 30 aus allen Richtungen umhüllen. Ein Positionierungselement kann hierfür derart ausgelegt sein, dass es sich während des Gießens auflöst oder wie ein Schieber zurückgezogen wird.

Die Sendeeinrichtung 50 dient der drahtlosen Ausgabe eines Signals S, welches auf einem mit der Sensoreinrichtung 40 bestimmten Parameter beruht. Hierfür sind die Sendeeinrichtung 50 und die Sensoreinrichtung 40 kommunizierend miteinander verbunden. Außerdem ist im Mikrosystem 30 ein Identifikationssignal ID hinterlegt, welches mit der Sendeeinrichtung 50 ausgebbar ist. Zur Ausgabe des Signals S wird die Bremsscheibe selbst als Antenne genutzt. Hilfsweise kann eine Antenne bis an die Oberfläche der Bremsscheibe geführt sein. Die Antenne kann dann gleichzeitig während des Gießens als Positionierungselement zur Fixierung des Mikrosystems in der Gießform dienen.

Die Sensoreinrichtung 40 weist wenigstens einen Sensor aus der Gruppe Temperatursensor, Schwingungssensor, Körperschallsensor und Dehnungssensor auf. Außerdem umfasst das Identifikationssignal ID wenigstens einen Parameter aus der Gruppe Identifikationsnummer, Bauteilnummer, Bremsscheibentyp, Produktionsnummer, Chargennummer, Herstelldatum, Herstellerkennung.

Die notwendige elektrische Energie zum Betrieb der Sensor- und Sendeeinrichtung 40, 50 liefert ein Stromerzeuger des Mikrosystems 30. Optional kann der Stromerzeuger durch Induktion, Umwandlung von Wärme oder durch Umwandlung von Beschleunigungsenergie, beispielsweise durch Vibrationen oder Antriebs- und Bremsbeschleunigungen, betrieben werden. Der Stromerzeuger sollte zusätzlich einen Energiespeicher aufweisen, um stets Energie zur Bestimmung von Parametern und zur Ausgabe von Signalen S bereitstellen zu können.

Weiterhin gehören zum Bremssystem 100 Bremsbeläge 113 zu beiden Seiten der Reibscheibe 10. Mittels eines Aktuators 112 kann die Reibscheibe 10 zwischen den Bremsbelägen 113 eingeklemmt werden.

Schematisch angedeutet ist außerdem eine Regeleinheit 110 mit einer Empfängereinrichtung 111. Die Empfängereinrichtung 111 kommuniziert drahtlos mit der Sendeeinrichtung 50, bzw. empfängt Signale S von dieser. In der Regeleinheit 110 ist ein Regelalgorithmus hinterlegt, zu dessen Eingangsgrößen das Signal S der Sendeeinrichtung 50 zählt. Als weitere Eingangsgrößen werden ein Bremspedalsignal S1, ein ABS-Sensorsignal S2 und ein ESP-Sensorsignal S3 verarbeitet. Auch weitere Signale von Fahrassistenzsystemen können Eingangsgrößen für den Regelalgorithmus darstellen. Hieraus errechnet der Regelalgorithmus als Ausgangsgröße ein Regelsignal R für den Aktuator 112, das an den Aktuator 112 weitergeleitet wird.

Die Erfindung ist nicht auf eine der vorbeschriebenen Ausführungsformen beschränkt, sondern in vielfältiger Weise abwandelbar.

**Bezugszeichenliste**

| | | | |
|---|---|---|---|
| 1 | Bremsscheibe | | |
| | | 100 | Bremssystem |
| 10 | Reibscheibe | | |
| 11 | vordere Scheibe | 110 | Regeleinheit |
| 12 | hintere Scheibe | 111 | Empfängereinrichtung |
| 13 | Verbindungselemente | 112 | Aktuator |
| | | 113 | Bremsbelag |
| 20 | Achsbefestigungseinrichtung | | |
| | | A | Rotationsachse |
| 30 | Mikrosystem | ID | Identifikationssignal |
| 31 | Kapsel | R | Regelsignal |
| | | S | Signal (Sensor) |
| 40 | Sensoreinrichtung | S1 | Bremspedalsignal |
| 41 | Vorverstärker | S2 | ABS-Sensorsignal |
| | | S3 | ESP-Sensorsignal |
| 50 | Sendeeinrichtung | | |

## Patentansprüche

1. Bremsscheibe (1), insbesondere für Fahrzeuge und Kraftfahrzeuge, mit
• einer Reibscheibe (10), die an einer Achsbefestigungseinrichtung (20) angeordnet ist, und
• einem Mikrosystem (30) aufweisend eine Sensoreinrichtung (40) und eine Sendeeinrichtung (50),
• wobei die Sensoreinrichtung (40) zur Bestimmung eines Parameters wenigstens einen Sensor aus der Gruppe Temperatursensor, Schwingungssensor, Körperschallsensor und Dehnungssensor umfasst, und
• wobei die Sendeeinrichtung (50) zur drahtlosen Ausgabe eines Signals (S) betreffend die mit der Sensoreinrichtung (40) erfassten Parameter kommunizierend mit der Sensoreinrichtung (40) verbunden ist,
**dadurch gekennzeichnet, dass** das Mikrosystem (30) durch Eingießen in die Reibscheibe (10) und/oder die Achsbefestigungseinrichtung (20) eingebracht ist, und dass das Mikrosystem (30) innenliegend in der Reibscheibe (10) und/oder der Achsbefestigungseinrichtung (20) angeordnet ist.

2. Bremsscheibe (1) nach Anspruch 1, **dadurch gekennzeichnet, dass** die Sensoreinrichtung (40) einen Vorverstärker (41) aufweist.

3. Bremsscheibe (1) nach einem der Ansprüche 1 oder 2, **dadurch gekennzeichnet, dass** im Mikrosystem (30) ein Identifikationssignal (ID) hinterlegt ist, welches mit der Sendeeinrichtung (50) ausgebbar ist.

4. Bremsscheibe (1) nach einem der vorhergehenden Ansprüche, **dadurch gekennzeichnet, dass** das Mikrosystem (30) hinter monolithisch ausgebildeten Wandungen der Reibscheibe (10) und/oder hinter monolithisch ausgebildeten Wandungen der Achsbefestigungseinrichtung (20) angeordnet ist.

5. Bremsscheibe (1) nach Anspruch 4, **dadurch gekennzeichnet, dass** das Mikrosystem in allen Richtungen hinter monolithisch ausgebildeten Wandungen der Reibscheibe (10) und/oder hinter monolithisch ausgebildeten Wandungen der Achsbefestigungseinrichtung (20) angeordnet und durch das Eingießen ringsherum eingeschlossen ist.

6. Bremsscheibe (1) nach einem der vorhergehenden Ansprüche, **dadurch gekennzeichnet, dass** das Mikrosystem (30) eine umhüllende Kapsel (31) aufweist, welche einen höheren Schmelzpunkt aufweist als das angrenzende Material der Reibscheibe (10) und/oder der Achsbefestigungseinrichtung (20).

7. **Bremssystem** (100), insbesondere für Fahrzeuge und Kraftfahrzeuge, mit einer Bremsscheibe (1) nach einem der vorhergehenden Ansprüche, einem Aktuator (112), mit welchem wenigstens ein Bremsbelag (113) bewegt wird, der mit der Reibscheibe (10) korrespondieren, und mit einer Regeleinheit (110), die eine Empfängereinrichtung (111) aufweist, wobei die Empfängereinrichtung (111) drahtlos kommunizierend mit der Sendeeinrichtung (50) verbunden ist, und wobei in der Regeleinheit (110) ein Regelalgorithmus hinterlegt ist, dessen Eingangsgröße wenigstens das Signal (S) der Sendeeinrichtung (50) und dessen Ausgangsgröße ein Regelsignal (R) für den Aktuator (112) ist.

8. **Fahrzeug** mit einem Bremssystem (100) nach Anspruch 7.

9. **Verwendung** eines Bremssystems (100) nach Anspruch 7 in einem Fahrzeug.

10. **Verfahren** zum Betrieb eines Bremssystems (100) nach Anspruch 7, bei dem folgende Schritte durchgeführt werden:
a) Betrieb der Bremsscheibe (1) durch wechselnden Kontakt zwischen der Bremsscheibe (1) und dem Bremsbelag (113);
b) Ausgeben eines Signals (S) mit der Sendeeinrichtung (50);
c) Empfangen des Signals (S) mit der Empfängereinrichtung (111);
d) Einspeisen des empfangenen Signals (S) in den Regelalgorithmus als Eingangsgröße;
e) Anpassung des Regelsignals (R) mit dem Regelalgorithmus zur Anpassung an das Signal (S).

11. **Verfahren** zur Herstellung einer Bremsscheibe (1) nach einem der Ansprüche 1 bis 6, umfassend die Schritte:
a) Bereitstellen einer Gießform mit einer Negativform einer Bremsscheibe (1), oder einer Reibscheibe (10) einer Bremsscheibe (1), oder einer Achsbefestigungsvorrichtung (20) einer Bremsscheibe (1), wobei die Gießform eine Kokille oder einen Kokilleneinleger mit wenigstens einem Kühlkanal aufweist;
b) Einlegen eines Mikrosystems (30) in die Gießform im Bereich der Kokille oder des Kokilleneinlegers;
c) Durchleiten eines Fluids durch den Kühlkanal;
d) Einfüllen von flüssigem Metall in die Gießform und umströmen des Mikrosystems (30) mit flüssigem Metall;
e) Kühlen und Erstarren des eingefüllten Metalls;
f) Entformen des erstarrten Metalls.

12. Verfahren nach Anspruch 11, **dadurch gekennzeichnet, dass** die Kühlrate des flüssigen Metalls über der Oberfläche der Negativform durch das Durchleiten des Fluids durch den Kühlkanal in der Umgebung des Mikrosystems (30) am höchsten ist.

## Claims

1. Brake disc (1), more particularly for vehicles and motor vehicles, comprising
• a friction disc (10), which is disposed on an axle fastening device (20), and
• a micro system (30) having a sensor device (40) and a transmitting device (50),
• wherein the sensor device (40), to determine a parameter, comprises at least one sensor from the group temperature sensor, vibration sensor, structure-borne-sound sensor and strain sensor, and
• wherein the transmitting device (50) is communicatingly connected to the sensor device (40) for wireless output of a signal (S) relating to the parameters captured with the sensor device (40),
**characterised in that** the micro system (30) is introduced into the friction disc (10) and/or the axle fastening device (20) through casting, and that the micro system (30) is disposed internally in the friction disc (10) and/or the axle fastening device (20).

2. Brake disc (1) according to claim 1, **characterised in that** the sensor device (40) has a preamplifier (41).

3. Brake disc (1) according to any of claims 1 or 2, **characterised in that** there is stored in the micro system (30) an identification signal (ID), which can be output with the transmitting device (50).

4. Brake disc, (1) according to any one of the preceding claims, **characterised in that** the micro system (30) is disposed behind monolithically formed walls of the friction disc (10) and/or behind monolithically formed walls of the axle fastening device (20).

5. Brake disc (1) according to claim 4, **characterised in that** the micro system is disposed in all directions behind monolithically formed walls of the friction disc (10) and/or behind monolithically formed walls of the axle fastening device (20) and is enclosed all around through casting.

6. Brake disc (1) according to any one of the preceding claims, **characterised in that** the micro system (30) has an encasing capsule (31), which has a higher melting point than the adjacent material of the friction disc (10) and/or of the axle fastening device (20).

7. **Brake system** (100), more particularly for vehicles and motor vehicles, comprising a brake disc (1) according to any one of the preceding claims, an actuator (112), with which at least one brake pad (113), corresponding to the friction disc (10), is moved, and comprising a control unit (110), which has a receiving device (111), wherein the receiving device (111) is connected to the transmitting device (50) by way of wireless communication, and wherein there is stored in the control unit (110) a control algorithm, the input quantity of which is at least the signal (S) of the transmitting device (50) and the output quantity of which is a control signal (R) for the actuator (112).

8. **Vehicle** comprising a brake system (100) according to claim 7.

9. **Use** of a brake system (100) according to claim 7 in a vehicle.

10. **Method** for operating a brake system (100) according to claim 7, in which the following steps are performed:
a) operation of the brake disc (1) through alternating contact between the brake disc (1) and the brake pad (113);
b) output of a signal (S) with the transmitting device (50);
c) receiving of the signal (S) with the receiving device (111);
d) feeding of the received signal (S) into the control algorithm as input quantity;
e) matching of the control signal (R) with the control algorithm to match the signal (S).

11. **Method** for producing a brake disc (1) according to any one of claims 1 to 6, comprising the steps:
a) provision of a casting mould with a negative mould of a brake disc (1), or of a friction disc (10) of a brake disc (1), or of an axle fastening device (20) of a brake disc (1), wherein the casting mould has a permanent mould or a permanent-mould insert with at least one cooling channel;
b) insertion of a microsystem (30) into the casting mould in the region of the permanent mould or of the permanent-mould insert;
c) passing of a fluid through the cooling channel;
d) pouring of liquid metal into the casting mould and passing of liquid metal around the microsystem (30);
e) cooling and solidifying of the poured metal;
f) extraction of the solidified metal from the mould.

12. Method according to claim 11, **characterised in that** the cooling rate of the liquid metal over the surface of the negative mould is highest in the area around the microsystem (30) owing to the passing of the fluid through the cooling channel.

## Revendications

1. Disque de frein (1), en particulier pour des véhicules et des véhicules automobiles, avec
- un disque de friction (10), qui est agencé au niveau d'un dispositif de fixation d'essieu (20), et
- un microsystème (30) comportant un dispositif capteur (40) et un dispositif émetteur (50),
- dans lequel le dispositif capteur (40) comprend en vue de la détermination d'un paramètre au moins un capteur du groupe capteur de température, capteur d'oscillation, capteur de bruit de structure et capteur de dilatation, et
- dans lequel le dispositif émetteur (50) est relié de manière à communiquer avec le dispositif capteur (40) en vue de la sortie sans fil d'un signal (S) concernant les paramètres détectés avec le dispositif capteur (40),
**caractérisé en ce que** le microsystème (30) est intégré par coulage dans le disque de friction (10) et/ou le dispositif de fixation d'essieu (20) et **en ce que** le microsystème (30) est agencé à l'intérieur dans le disque de friction (10) et/ou le dispositif de fixation d'essieu (20).

2. Disque de frein (1) selon la revendication 1, **caractérisé en ce que** le dispositif capteur (40) comporte un préamplificateur (41).

3. Disque de frein (1) selon l'une quelconque des revendications 1 ou 2, **caractérisé en ce qu'**un signal d'identification (ID), qui peut être délivré avec le dispositif émetteur (50), est enregistré dans le microsystème (30).

4. Disque de frein (1) selon l'une quelconque des revendications précédentes, **caractérisé en ce que** le microsystème (30) est agencé derrière des parois, réalisées d'un seul bloc, du disque de friction (10) et/ou derrière des parois, réalisées d'un seul bloc, du dispositif de fixation d'essieu (20).

5. Disque de frein (1) selon la revendication 4, **caractérisé en ce que** le microsystème est agencé dans tous les directions derrière des parois, réalisées d'un seul bloc, du disque de friction (10) et/ou derrière des parois, réalisées d'un seul bloc, du dispositif de fixation d'essieu (20) et est entièrement inclus par le coulage.

6. Disque de frein (1) selon l'une quelconque des revendications précédentes, **caractérisé en ce que** le microsystème (30) comporte une capsule enveloppante (31) qui présente un point de fusion plus élevé que le matériau adjacent du disque de friction (10) et/ou du dispositif de fixation d'essieu (20).

7. **Système de freinage** (100), pour des véhicules et des véhicules automobiles, avec un disque de frein (1) selon l'une quelconque des revendications précédentes, avec un actionneur (112), avec lequel est déplacée au moins une garniture de frein (113) qui correspond au disque de friction (10), et avec une unité de régulation (110), qui comporte un dispositif récepteur (111), dans lequel le dispositif récepteur (111) est relié de manière à communiquer sans fil avec le dispositif émetteur (50) et dans lequel est enregistré dans l'unité de régulation (110) un algorithme de régulation dont la grandeur d'entrée est au moins le signal (S) du dispositif émetteur (50) et dont la grandeur de sortie est un signal de régulation (R) pour l'actionneur (112).

8. **Véhicule** avec un système de freinage (100) selon la revendication 7.

9. **Utilisation** d'un système de freinage (100) selon la revendication 7 dans un véhicule.

10. **Procédé** de fonctionnement d'un système de freinage (100) selon la revendication 7, selon lequel les étapes suivantes sont mises en oeuvre :
a) fonctionnement du disque de frein (1) par contact variable entre le disque de frein (1) et la garniture de frein (113) ;
b) sortie d'un signal (S) avec le dispositif émetteur (50) ;
c) réception du signal (S) avec le dispositif récepteur (111) ;
d) introduction du signal reçu (S) dans l'algorithme de régulation comme grandeur d'entrée ;
e) adaptation du signal de régulation (R) avec l'algorithme de régulation en vue de l'adaptation au signal (S).

11. **Procédé** de fabrication d'un disque de frein (1) selon l'une quelconque des revendications 1 à 6, comprenant les étapes :
a) fourniture d'un moule avec une forme en négatif d'un disque de frein (1), ou d'un disque de friction (10) d'un disque de frein (1), ou d'un dispositif de fixation d'axe (20) d'un disque de frein (1), dans lequel le moule comporte une coquille ou un poseur de coquille avec au moins un canal de refroidissement ;
b) agencement d'un microsystème (30) dans le moule dans la zone de la coquille ou du poseur de coquille ;
c) conduite d'un fluide dans le canal de refroidissement ;
d) remplissage du moule avec du métal liquide et enveloppement du microsystème (30) avec du métal liquide ;
e) refroidissement et solidification du métal versé ;
f) démoulage du métal solidifié.

12. Procédé selon la revendication 11, **caractérisé en ce que** le taux de refroidissement du métal liquide sur la surface de la forme en négatif via la conduite du fluide dans le canal de refroidissement est au maximum dans l'environnement du microsystème (30).
